Europäisches Patentamt

European Patent Office

Office européen des brevets

(11) Publication number:

**0 282 130**
**A2**

(12) # EUROPEAN PATENT APPLICATION

(21) Application number: 88200394.0

(22) Date of filing: 02.03.88

(51) Int. Cl.⁴: **C08K 5/14** , C08L 83/04 , C08J 3/24

(30) Priority: **10.03.87 JP 52859/87**

(43) Date of publication of application:
**14.09.88 Bulletin 88/37**

(84) Designated Contracting States:
**AT BE CH DE ES FR GB GR IT LI LU NL SE**

(71) Applicant: **Kayaku Noury Corporation**
**Tokyo Fujimi Building 11-2, Fujimi 1-chome**
**Chiyoda-ku**
**Tokyo 102(JP)**

(72) Inventor: **Kuroda, Shin-ichi**
**3850-7, Ooaza Nishikiwa**
**Ube City Yamaguchi Pref.(JP)**
Inventor: **Yanagi, Shooichi**
**871-6, Kitanagai Miyoshi-machi**
**Iruma-gun Saitama Pref.(JP)**
Inventor: **Takemoto, Hideki**
**4038-1, Ooaza Onoda**
**Onoda city Yamaguchi Pref.(JP)**

(74) Representative: **Sieders, René et al**
**AKZO N.V. Patent Department (Dept. CO)**
**P.O. Box 9300**
**NL-6800 SB Arnhem(NL)**

(54) **A process for crosslinking silicone rubbers.**

(57) The invention relates to the use of bis(2-fluorobenzoyl) peroxide for crosslinking silicone rubbers. A particularly useful composition will further comprise a phlegmatizing agent.

EP 0 282 130 A2

# A process for crosslinking silicone rubbers

Silicone rubbers are crosslinked and moulded generally by heating with an organic peroxide. Silicone rubbers which are generally used include dimethyl silicone rubber and chlorosilicone rubber. They can be excellently crosslinked and display low-temperature characteristics and oil resistance.

Silicone rubber mouldings are obtained by compounding the above-mentioned silicone rubber with a reinforcing agent such as dry or wet silica, a plasticizer such as silicone oil, and other additives used for improving physical properties, adding to this the required amount of an organic peroxide used as a crosslinking agent, and heating the resulting mixture to a given temperature in a mould or a hot air furnace for a given time to obtain the envisaged mouldings.

In crosslinking the silicone rubber compounds use has as a rule been made of organic peroxides in the form of an industrially pure compound or a pasty composition. The organic peroxides include bis(2,4-dichlorobenzoyl) peroxide, bis(p-chlorobenzoyl) peroxide, 2,5-di(t-butyl peroxy) hexane, t-butyl cumyl peroxide, dicumyl peroxide and di-t-butyl peroxide. The crosslinking agent and the amount used thereof are dependent on the moulding process for the silicone rubber, moulding temperature, the type of silicone rubber and types of additives.

Among the above-mentioned crosslinking agents bis(2,4-dichlorobenzoyl) peroxide is a particularly excellent crosslinking agent and the one most frequently used on an industrial scale. A characteristic of bis-(2,4-dichlorobenzoyl) peroxide is that of the above crosslinking agents it displays the highest crosslinking rate and the greatest effectiveness. The particular characteristic of this peroxide is that it is capable of effecting hot air vulcanization (HAV) with a high efficiency.

The hot air vulcanization process comprises continuous crosslinking of extruded mouldings. In this process, silicone rubber tubes or silicone rubber-coated electric wires extruded with an extruder are crosslinked by being passed through a hot air furnace at about 300 to 400°C. Bis(2,4-dichlorobenzoyl) peroxide and bis(p-chorobenzoyl) peroxide are crosslinking agents capable of crosslinking the silicone rubber with hot air without foaming the mouldings. However, bis(p-chlorobenozyl) peroxide has only a low crosslinking rate and, therefore, in practice its use in hot air crosslinking is substantially limited to bis(2,4-dichlorobenzoyl) peroxide. However, silicone rubber mouldings obtained by using this crosslinking agent in hot air vulcanization or compression moulding suffer from blooming. Blooming is a phenomon of gradual exudation of decomposition products of the crosslinking agent with whitening of the surface of the moulding. To prevent blooming, the silicone rubber mouldings crosslinked with bis(2,4-dichlorobenzoyl) peroxide must be subjected to a prolonged post-heat treatment at elevated temperature after the moulding step. Bis(2,4-dichlorobenzoyl) peroxide needs the lowest crosslinking temperature and of conventional silicone rubber-crosslinking agents it displays the highest crosslinking rate and it is the only crosslinking agent that may be used for the hot air vulcanization process. The problem to it, however, is the need for a post-heat treatment. There is urgent need for a solution to this problem.

After thorough investigations the inventors have found that silicone rubber mouldings free from blooming can be obtained by using bis(2-fluorobenzoyl) peroxide as the crosslinking agent in stead of bis-(2,4-dichlorobenzoyl) peroxide and that a higher crosslinking rate may be obtained by using the former. The present invention has been completed on the basis of this finding.

In the following examples the physical properties will be shown of mouldings obtained by compression moulding or hot air moulding using bis(2-fluorobenzoyl) peroxide or bis(2,4-dichlorobenzoyl) peroxide. It will be understood that when bis(2-fluorobenzoyl) peroxide is used, no blooming is caused and the physical properties obtained will be similar or superior to those obtained when using bis(2,4-dichlorobenzoyl) peroxide.

In addition to these advantages, such a use will provide the same physical property in crosslinked silicone rubber in a dosage level as low as 70% of bis(2,4-dichlorobenzoyl) peroxide, as shown in Example 1.

The invention further provides a composition useful for crosslinking silicone rubber. This composition comprises from 1 to 99 wt.%, preferably from 20 to 80 wt.%, of bis(2-fluorobenzoyl) peroxide and from 99 to 1 wt.%, preferably from 80 to 20 wt.%, of a phlegmatizing agent.

A process for producing a 50% paste of bis(2-fluorobenzoyl) peroxide in silicone oil used in the experiments is described in the following Production Example 1. The paste may also be produced by various other processes. The silicone oil used for safety may partially or entirely be replaced with a phthalic ester without reducing the performance. Though bis(2-fluorobenzoyl) peroxide may be used in the form of a pure compound, it is preferred that paste should be formed thereof in silicone oil or phthalic ester for reasons of safety and to reduce the particle size.

2

Bis(2-fluorobenzoyl) peroxide may be used in combination with another crosslinking agent to prevent scorching or to accelerate the crosslinking when the crosslinking agent has a low crosslinking rate.

The amount of bis(2-fluorobenzoyl) peroxide to be added to the silicone rubber is about 0,5 to 10 mmoles, preferably about 1 to 10 mmoles, per 100 g of the silicone rubber.

Crosslinking silicone rubbers include dimethyl silicone rubber and methylvinyl silicone rubber. The crosslinking temperature is preferably from about 90° to 150°C.

## Production Example 1

600 g of water, 400 g (2,5 moles) of a 25% sodium hydroxide solution and 10 g of a 10% aqueous solution of Neogen R (a product of Daiichi Kogyo Seiyaku Co., Ltd.) were charged in a 2-L beaker provided with a stirrer, a thermometer, and a dropping funnel. The reactants were externally cooled to 10°C. With stirring 68 g (1,2 moles) of a 60% aqueous hydrogen peroxide solution were added dropwise to the resulting solution, the temperature being kept at 10 to 15°C. To the resulting mixture 320 g (2,0 moles) of 2-fluorobenzoyl chloride were added slowly with vigorous stirring at 10° to 15°C. The reaction mixture was stirred at 10 to 15°C for an additional 60 min. After completion of the reaction, the reaction mixture was filtered by suction through a Buchner funnel. The solids were washed with water until the wash solution became non-alkaline, to obtain 340 g of wet bis(2-fluorobenzoyl) peroxide.

The wet product was dried under reduced pressure at room temperature to obtain 253 g (yield: 91.0%) of bis(2-fluorobenzoyl) peroxide having a purity of 98.5%. An amount of 200 g of dimethyl silicone oil was added to 200 g of the resulting pure bis(2-fluorobenzoyl) peroxide. After thorough mixing they were passed through a three-roll mill to obtain 395 g of 50% bis(2-fluorobenzoyl) peroxide paste (assay: 49.2%).

## Example 1

A methylvinyl silicone rubber compound was mixed thoroughly with the required amount of the 50% bis(2-fluorobenzoyl) peroxide paste obtained in the above Production Example 1 and the crosslinking was effected in a mould of 2 mm thickness at 120°C for 10 min. The tensile strength, elongation and hardness (Shore A) of the resulting sheet were determined in accordance with the specification of JISK-6301 (Physical testing methods for vulcanized rubbers). The blooming was judged by visual inspection of the appearance of the sheet's surface on the first day and the seventh day following the crosslinking. A commercially available 50% bis(2,4-dichlorobenzoyl) peroxide paste was used for comparison. The results are summarized in the following table:

| Crosslinking agent | Amount | Press conditions | Physical properties of crosslinked product | | | Blooming | |
|---|---|---|---|---|---|---|---|
| | phr | | Tensile strength kg/cm$^2$ | Elonga-tion % | Hardness | 1 day | 7 days |
| 50% bis(2-fluorobenzoyl) peroxide paste | 1.2 | 120°C x 10 min | 118 | 420 | 53 | no | no |
| 50% bis(2,4-dichloro-benzoyl) peroxide paste | 1.7 | ditto | 113 | 440 | 53 | yes | yes |

## Example 2

A crosslinking agent was mixed thoroughly with a methylvinyl silicone rubber compound and the mixture was then moulded into a sheet of about 2 mm thickness with cooling in the same manner as in Example 1. The resulting non-crosslinked sheet was heated with hot air in a gear-type aging tester at 190°C for 15 min for crosslinking. The stickiness of the surface and foaming on the cross section of the resulting moulding were examined. The blooming was judged by visual inspection of the appearance of the sheet surface on the first day and seventh day after the crosslinking.

The crosslinking agents were the same as those used in Example 1. The results are summarized in the following table:

| Crosslinking agent | Amount | Crosslinking product | | Blooming | |
|---|---|---|---|---|---|
| | phr | Stickiness | Foaming | 1 day | 7 days |
| 50% bis(2-fluorobenzoyl) peroxide paste | 1.2 | no | no | no | no |
| 50% bis(2,4-dichloro-benzoyl) peroxide paste | 1.7 | no | no | yes | yes |

**Claims**

1. A process for crosslinking silicone rubbers by adding an organic peroxide and heating the resulting mixture, wherein the peroxide comprises bis(2-fluorobenzoyl) peroxide.

2. A composition useful for crosslinking silicone rubbers comprising from 1 to 99 wt.% of bis(2-fluorobenzoyl) peroxide and from 99 to 1 wt.% of a phlegmatizing agent.

3. The composition of claim 2, wherein the phlegmatizing agent is silicone oil.

4. The composition of claim 2, wherein the phlegmatizing agent is a phthalic ester.